# EUROPEAN PATENT SPECIFICATION

(11) **EP 2 905 452 B1**
(45) Date of publication and mention of the grant of the patent: **10.06.2020**
(21) Application number: 14179201.0
(22) Date of filing: 30.07.2014
(51) Int. Cl.: F02D 41/22, F02D 41/26, F02D 29/02, G07C 5/08, B60W 50/02, B60W 50/029, B60W 50/04, G05B 19/042, G05B 23/02

(54) **Asil B-compliant implementation of automotive safety-related functions by means of a high diagnosability, quality managed-compliant integrated circuit**
ASIL B-kompatible Implementierung von automobilsicherheitsrelevanten Funktionen mittels hoher Diagnosefähigkeit, qualitätsverwaltungskompatible integrierte Schaltung
Mise en oeuvre de fonctions liées à la sécurité automobile conformes à Asil B au moyen d'un circuit intégré conforme à la gestion de qualité et à capacité de diagnostic très élevée

(30) Priority: 30.07.2013 IT TO20130646
(43) Date of publication of application: 12.08.2015
(73) Proprietor: Magneti Marelli S.p.A., Corbetta (MI) (IT); Exida Development S.r.l., 10010 Colleretto Giacosa (IT)
(72) Inventor: Carbonaro, Piero, 10126 Torino (IT); Dallara, Giovanni, 10015 Ivrea (IT); Fusari, Alessandro, 26100 Cremona (IT); Pezzoli, Alberto, 10141 Torino (IT); Traversi, Francesco, 10099 San Mauro Torinese (IT); Lambertini, Loris, 40056 Crespellano (IT)
(74) Representative: Bergadano, Mirko

(56) References cited:
- DE-A1- 19 605 606
- DE-A1-102010 000 397
- DE-A1-102010 062 476
- US-A1- 2002 193 935
- US-A1- 2009 030 587
- US-A1- 2010 036 558
- US-B1- 6 230 094

## Description

### TECHNICAL FIELD OF THE INVENTION

The present invention relates to Automotive Safety Integrity Level B (ASIL B)-compliant implementation of automotive safety-related functions by means of a high diagnosability, Quality Managed (QM)-compliant integrated circuit.

### STATE OF THE ART

As is known, safety is one of the main subjects in the automotive industry. The on-vehicle integration of electric and electronic systems requires development processes and safety content, and also the opportunity to provide proof that all reasonable safety goals have been met.

New technologies based on functionalities distributed in various electronic control units typically developed by different suppliers increase the complexity, software content and mechatronic implementation and accordingly, the risks of system and hardware failures.

Increasing the integration of electric and electronic apparatuses (including programmable devices, as well as electromechanical components) in automotive systems has led to the introduction of international standard ISO 26262, which is dealt with by functional safety standard IEC 61508 for electric/electronic systems in industry.

Standard ISO 26262 provides the process and product requirements for lessening the effects of system and hardware failures. This standard deals with functional safety concepts applied to the automotive field, while pursuing the absence of unacceptable risks due to hazards caused by undesired behaviour of the systems.

Standard ISO 26262 defines four Automotive Safety Integrity Levels (ASIL) while specifying risks and the needs for reducing risk. ASIL can take on four different values for safety-related functions, indicated with letters, from the lowest, indicated by the letter D, which is the most critical level in terms of safety integrity, up to the highest level, indicated by the letter A, which is the minimum safety integrity level. ASIL may also take on the value QM (Quality Managed), which however is assigned to non-safety-related functions.

The hazard and risk assessment set forth by standard ISO 26262, and the reference document "Standardized E-Gas-Monitoring Concept for Engine Controls of Otto and Diesel Engines", version 5.0, published by the German Association of the Automotive Industry or VDA (Verband der Automobilindustrie), provide that the implementation of automotive safety-related functions involved in managing the supply of torque by an internal combustion engine have ASIL B.

US 2002/193935 A1, US 2009/030587 A1, US 6 230 094 B1, DE 196 05 606 A1 and DE 10 2010 000 397 A1 describe known automotive internal combustion engine electronic control units.

### SUBJECT AND SUMMARY OF THE INVENTION

Designing, developing and manufacturing integrated circuits that implement ASIL B-compliant automotive safety-related functions require significant resources. It would therefore be appreciated to define a more affordable solution that allows the requirements set forth in the above-mentioned standard and in the above-mentioned document to be met by means of integrated circuits which, although they are designed, developed and manufactured with Quality Managed criteria, allow ASIL B safety-related functions to be implemented in accordance with to the provisions set forth in the above-mentioned standard and in the above-mentioned document.

The object of the present invention is therefore to provide a solution which allows the above need to be met.

According to the present invention, an automotive internal combustion engine electronic control unit is provided, as defined in the appended claims.

### BRIEF DESCRIPTION OF THE DRAWINGS

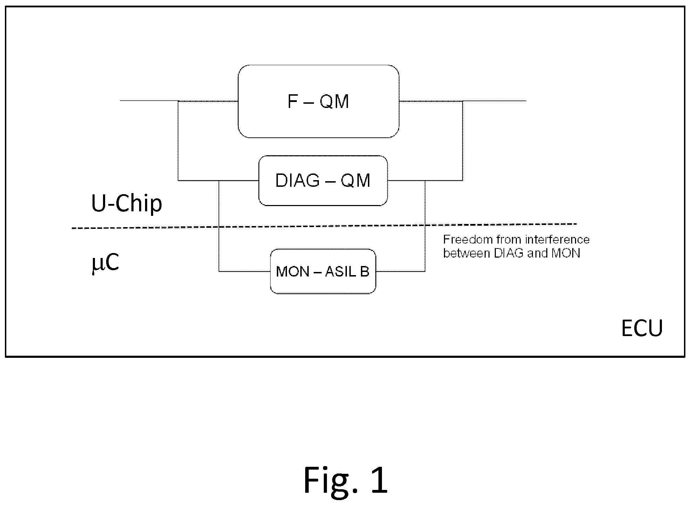

Figure 1 shows a principle block diagram which shows the way in which an automotive safety-related function, indicated by F, may be implemented in such a manner so as to be ASIL B compliant by means of the implementation thereof according to Quality Managed standards, in which a diagnosis function DIAG may be developed according to Quality Managed standards and in which a monitoring function MON may be developed according to standard ASIL B; the implementation of function F and of function DIAG is allocated to an integrated circuit U-Chip; the implementation of function MON is instead allocated to a microcontroller µC.
Figure 2 shows a block diagram of the functions performed by an integrated circuit.
Figure 3 shows a block diagram of a generic diagnostic function DIAG implemented in an integrated circuit U-Chip, according to that diagrammatically shown in figure 1.
Figure 4 shows a block diagram of a safety architecture of an automotive internal combustion engine electronic control unit.
Figure 5 shows a block diagram of how an overvoltage may propagate within the automotive internal combustion engine electronic control unit in figure 4.

### DETAILED DESCRIPTION OF PREFERRED EMBODIMENTS OF THE INVENTION

The present invention will now be described in detail with reference to the accompanying figures to allow a skilled person to make and use it. Various modifications to the embodiments described will be immediately apparent to skilled persons without departing from the scope of protection of the present invention, as defined in the appended claims.

Figure 1 shows a principle block diagram which shows the way in which an automotive safety-related function, indicated by F, may be implemented in such a manner so as to be ASIL B compliant by means of an integrated circuit developed according to Quality Managed standards.

The integrated circuit, hereinafter indicated in short with U-Chip (Umbrella-Chip), dedicated, among other things, to performing F, is arranged in an automotive internal combustion engine electronic control unit, indicated by ECU, is an electronic component distinct from and communicating with the microcontroller, indicated by µC, of ECU, and is designed to perform Quality Managed-compliant functions, which, therefore, fail to reach the ASIL B required for the implementation of F.

Whatever indicated below concerning F and shown in figure 1 is valid and repeatable for each F performed by U-Chip wanted to be performed by the ECU in compliance with ASIL B requirements.

With reference to figure 1, in order to ensure that an F is implemented by the ECU with ASIL B, in addition to function F, U-Chip also performs a diagnosis function, indicated by DIAG, designed to detect failures that may jeopardize the proper performance of F. As it is performed by U-Chip, DIAG is obviously performed with the same QM ASIL with which F is performed.

A monitoring function, indicated by MON and designed to monitor the operability of DIAG and in particular to detect failures that may compromise the effectiveness of the diagnostic capability of DIAG, is instead performed by µC of ECU, which is instead designed to perform functions with an ASIL B and is exempt from any functional interferences resulting from failures in the performance of DIAG or F.

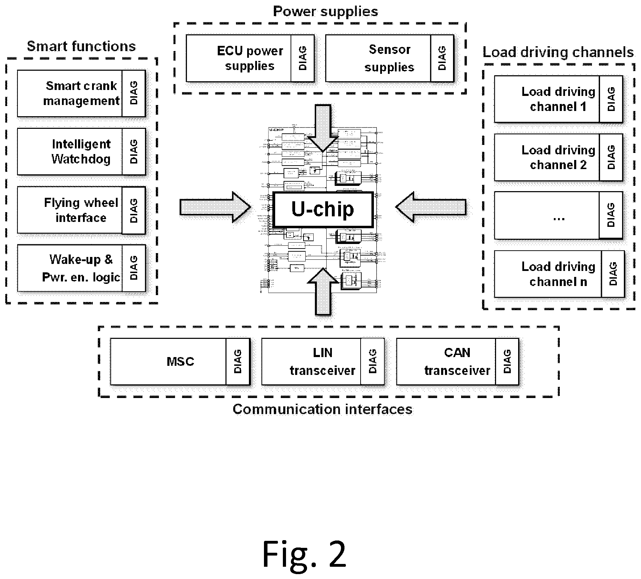

Figure 2 shows a block diagram of the functions F performed by U-Chip, which comprise:
- intelligent functions comprising:
   - smart crank management
   - intelligent watchdog
   - flying wheel interface
   - wake-up and power enable logic
- power supplies comprising:
   - ECU power supplies
   - sensor power supplies
- communication interfaces comprising:
   - MSC (Micro Second Channel) interface
   - LIN (Local Interconnect Network) transceiver
   - CAN (Controller Area Network) transceiver
- load driving channels.

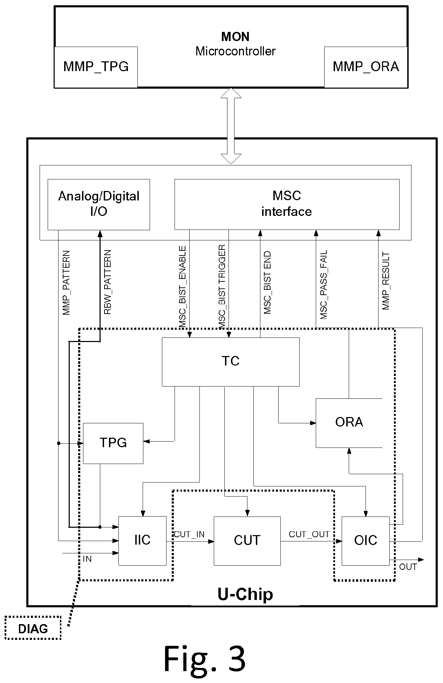

Figure 3 instead shows a block diagram of how F and DIAG are implemented in U-Chip, in which:
- TC is a Test Controller designed to enable and synchronize the performance of DIAG,
- CUT is a Circuit Under Test designed to implement function F that DIAG is to monitor,
- TPG is a Test Pattern Generator designed to test correct operation of CUT,
- ORA is an Output Response Analyzer designed to compare the test results, and in particular to compare the output of CUT with an expected output and provide an indication of test success or test failure,
- IIC is an Input Isolation Circuit designed to connect the input of CUT to TPG when DIAG must be performed,
- OIC is an Output Isolation Circuit designed to connect the output of CUT to ORA when DIAG must be performed.

Generally, DIAG is managed by the following signals:
- MSC_BIST_ENABLE: signal from µC for test enabling
- MSC_BIST_TRIGGER: signal from µC that triggers the performance of DIAG
- MSC_BIST_END: signal from TC that indicates the end of the performance of DIAG to µC
- MSC_PASS_FAIL: result of the performance of DIAG

MON is designed to re-perform a group of well-defined tests performed by DIAG in order to verify, on the one hand, the proper performance of F and on the other, the proper performance of DIAG.

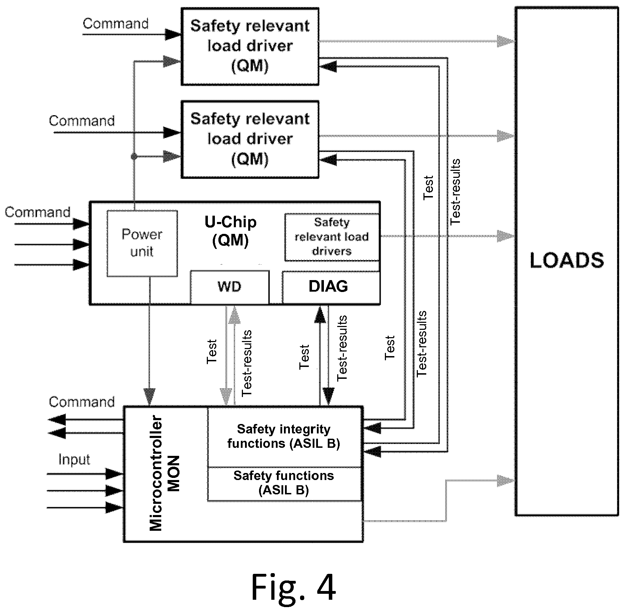

If MON detects a test failure of F or a mismatch between a result of a test reported by DIAG and a result of a test reported by MON, then MON triggers a safe reaction, which could conveniently consist of de-energizing safety-related loads, as will be more apparent by the description in figure 4.

Finally, not only is MON designed to monitor U-Chip, and in particular the operability of DIAG, but also other safe-related integrated circuits, as will be more apparent by the description in figure 4.

As indicated above, one of the elements that ensures the proper performance of the functional architecture of the invention is that µC of ECU be exempt from functional interferences resulting from failures in the performance of DIAG or F.

A well-known cause which may compromise this absence of functional interference is the presence of an overvoltage propagating from U-Chip to µC which is designated to the performance of MON.

Figure 4 shows a block diagram of a safety architecture of ECU which allows this propagation to be mitigated while protecting part of the safety-related loads.

It is worth noting that U-Chip is provided with its own embedded safety-related load drivers, through which it drives given safety-related loads, hereinafter indicated by G2, while µC is not provided with its own embedded safety-related load drivers, but controls external safety-related load drivers of ECU, through which it drives other safety-related loads, hereinafter indicated by G1.

The external load drivers controlled by µC are provided with respective embedded Over/Under Voltage Monitors (O/U VM) designed to detect presence of an overvoltage propagating from µC towards the loads G1 and to responsively generate a de-energization command for the loads G1, thus causing the de-energizing thereof and protecting them from any damage due to overvoltage.

Furthermore, as is worth noting, the load drivers controlled by µC, like µC itself, are powered by the power supplies of U-Chip, which are therefore shared by U-Chip, µC and the external load drivers controlled by µC.

For this reason, a possible overvoltage generated within U-Chip and propagating into µC may compromise the functionality of MON, obviously in addition to the loads G2 driven by U-Chip.

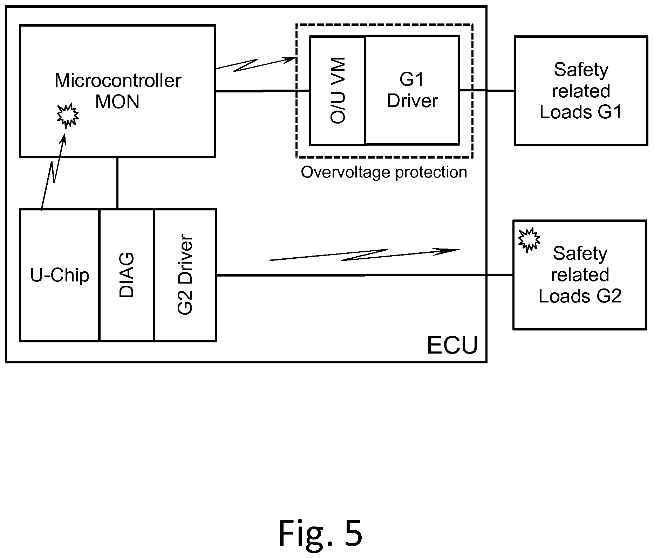

As instead shown in figure 5, due to the implementation of external load drivers provided with embedded over/under voltage monitors, a possible overvoltage generated in U-Chip and propagated to µC and, therefrom to the loads G1, or generated directly in µC and propagated to the loads G1, is detected by the embedded over/under voltage monitors, which responsively trigger a safe reaction comprising the generation of a de-energization command for the loads G1, thus causing the de-energization thereof and protecting them from possible damage due to overvoltage.

## Claims

1. An automotive internal combustion engine electronic control unit (ECU) required to perform safety-related functions (F) with a predetermined automotive safety integrity level (ASIL); wherein the automotive electronic control unit (ECU) comprises a microcontroller (µC) and an integrated circuit (U-Chip) distinct from and communicating with the microcontroller (µC); wherein the microcontroller (µC) is designed to perform one or more safety-related functions (F) with the same automotive safety integrity level as the one required to the automotive electronic control unit (ECU); wherein the integrated circuit (U-Chip) is designed to perform one or more safety-related functions (F) with an automotive safety integrity level lower than that of the microcontroller (µC); wherein the integrated circuit (U-Chip) is further designed to perform, for each performed safety-related function (F), a corresponding diagnosis function (DIAG) designed to detect failures in the performance of the safety-related function (F); and wherein the microcontroller (µC) is designed to perform, for each performed diagnosis function (DIAG), a corresponding monitoring function (MON) designed to monitor the performance of the corresponding diagnosis function (DIAG) by the integrated circuit (U-Chip) to detect failures that may compromise the diagnostic capability of the diagnosis function (DIAG).

2. The automotive internal combustion engine electronic control unit according to claim 1, wherein the monitoring function (MON) is designed to re-perform tests performed by the diagnosis function (DIAG) to check proper performance of both the safety-related function (F) and the diagnosis function (DIAG); and wherein the monitoring function (MON) is further designed to trigger a safe reaction when either a test failure of the safety-related function (F) or a mismatch between a test result reported by the diagnosis function (DIAG) and a test result reported by the monitoring function (M) is detected.

3. The automotive internal combustion engine electronic control unit according to claim 2, wherein the safe reaction triggered by the monitoring function (MON) comprises de-energizing automotive safety-related loads.

4. The automotive internal combustion engine electronic control unit according to any one of the preceding claims, wherein the automotive safety integrity level of performance of safety-related functions (F) required to the automotive electronic control unit (ECU) is ASIL B, while the automotive safety integrity level of performance of safety-related functions (F) required to the integrated circuit (U-Chip) is ASIL QM (Quality Managed).

5. The automotive internal combustion engine electronic control unit according to any one of the preceding claims, wherein the safety-related functions (F) comprise one or more of the following:
• intelligent functions comprising:
- smart crank management
- intelligent watchdog
- flying wheel interface
- wake-up and power enable logic
• power supplies comprising:
- ECU power supplies
- sensor power supplies
• communication interfaces comprising:
- MSC (Micro Second Channel) interface
- LIN (Local Interconnect Network) transceiver
- CAN (Controller Area Network) transceiver
• load driving channels.

6. The automotive internal combustion engine electronic control unit according to any one of the preceding claims, wherein the integrated circuit (U-Chip) comprises:
- a Test Controller (TC) designed to enable and synchronize the performance of the diagnosis function (DIAG);
- a Circuit Under Test (CUT), which implements the safety-related function (F) to be tested;
- a Test Pattern Generator (TPG) designed to test correct operation of the Circuit Under Test (CUT);
- an Output Response Analyzer (ORA) designed to compare an output of the Circuit Under Test (CUT) with an expected output and provide an indication of test success or test failure;
- an Input Isolation Circuit (IIC) designed to connect an input of the Circuit Under Test (CUT) to the Test Pattern Generator (TPG) when the diagnosis function (DIAG) must be performed; and
- an Output Isolation Circuit (OIC) designed to connect an output of the Circuit Under Test (CUT) to the Output Response Analyzer after the diagnosis function (DIAG) has been performed.

7. The automotive internal combustion engine electronic control unit according to any one of the preceding claims, wherein the integrated circuit (U-Chip) further comprises embedded safety-related load drivers, through which the integrated circuit (U-Chip) drives safety-related loads (G2); wherein the microcontroller (µC) lacks embedded safety-related load drivers; wherein the automotive internal combustion engine electronic control unit (ECU) further comprises external safety-related load drivers separated from and controlled by the microcontroller (µC), through which the microcontroller (µC) drives different safety-related loads (G1); and wherein the external safety-related load drivers are provided with respective embedded Over/Under Voltage Monitors (O/U VM) designed to detect overvoltage propagating from the microcontroller (µC) towards the respective safety-related loads (G1) and to responsively generate a de-energization command for the associated safety-related loads (G1).

8. The automotive internal combustion engine electronic control unit (ECU) according to claim 7, wherein the integrated circuit (U-Chip) further comprises an electric power supply unit arranged to power the integrated circuit (U-Chip), the microcontroller (µC) and the external safety-related load drivers.

9. A motor vehicle comprising an automotive internal combustion engine electronic control unit according to any one of the preceding claims.

## Patentansprüche

1. Elektronische Steuereinheit (ECU) für einen Kraftfahrzeug-Verbrennungsmotor, die sicherheitsrelevante Funktionen (F) mit einem vorbestimmten Kraftfahrzeugsicherheits-Integritätsniveau (ASIL) ausführen muss; wobei die elektronische Kraftfahrzeugsteuereinheit (ECU) einen Mikrocontroller (µC) und eine von dem Mikrocontroller (µC) verschiedene und mit diesem kommunizierende integrierte Schaltung (U-Chip) enthält; wobei der Mikrocontroller (µC) dafür konstruiert ist, eine oder mehrere sicherheitsrelevante Funktionen (F) mit demselben Kraftfahrzeugsicherheits-Integritätsniveau wie dem für die elektronische Kraftfahrzeugsteuereinheit (ECU) erforderlichen auszuführen; wobei die integrierte Schaltung (U-Chip) dafür konstruiert ist, eine oder mehrere sicherheitsrelevante Funktionen (F) mit einem Kraftfahrzeugsicherheits-Integritätsniveau auszuführen, das niedriger ist als dasjenige des Mikrocontrollers (µC); wobei die integrierte Schaltung (U-Chip) ferner dafür konstruiert ist, für jede durchgeführte sicherheitsrelevante Funktion (F) eine korrespondierende Diagnosefunktion (DIAG) auszuführen, die zum Erfassen von Fehlern bei der Ausführung der sicherheitsrelevanten Funktion (F) gestaltet ist; und wobei der Mikrocontroller (µC) dafür konstruiert ist, für jede durchgeführte Diagnosefunktion (DIAG) eine korrespondierende Überwachungsfunktion (MON) auszuführen, die zur Überwachung der Durchführung der korrespondierenden Diagnosefunktion (DIAG) durch die integrierte Schaltung (U-Chip) gestaltet ist, um Fehler zu erfassen, die die Diagnosefähigkeit der Diagnosefunktion (DIAG) beeinträchtigen können.

2. Elektronische Steuereinheit für einen Kraftfahrzeug-Verbrennungsmotor nach Anspruch 1, wobei die Überwachungsfunktion (MON) dafür gestaltet ist, durch die Diagnosefunktion (DIAG) durchgeführte Tests erneut durchzuführen, um die ordnungsgemäße Durchführung sowohl der sicherheitsrelevanten Funktion (F) als auch der Diagnosefunktion (DIAG) zu überprüfen; und wobei die Überwachungsfunktion (MON) ferner dafür gestaltet ist, eine Sicherheitsreaktion auszulösen, wenn entweder ein Testversagen der sicherheitsrelevanten Funktion (F) oder eine fehlende Übereinstimmung zwischen einem von der Diagnosefunktion (DIAG) berichteten Testergebnis und einem von der Überwachungsfunktion (M) berichteten Testergebnis erfasst wird.

3. Elektronische Steuereinheit für einen Kraftfahrzeug-Verbrennungsmotor nach Anspruch 2, wobei die von der Überwachungsfunktion (MON) ausgelöste Sicherheitsreaktion die Trennung von sicherheitsrelevanten Lasten des Kraftfahrzeugs von der Energieversorgung umfasst.

4. Elektronische Steuereinheit für einen Kraftfahrzeug-Verbrennungsmotor nach einem der vorhergehenden Ansprüche, wobei das Kraftfahrzeugsicherheits-Integritätsniveau der Durchführung der sicherheitsrelevanten Funktionen (F), das für die elektronische Kraftfahrzeugsteuereinheit (ECU) erforderlich ist, ASIL B ist, während das Kraftfahrzeugsicherheits-Integritätsniveau der Durchführung der sicherheitsrelevanten Funktionen (F), das für die integrierte Schaltung (U-Chip) erforderlich ist, ASIL QM (Quality Managed) ist.

5. Elektronische Steuereinheit für einen Kraftfahrzeug-Verbrennungsmotor nach einem der vorhergehenden Ansprüche, wobei die sicherheitsrelevanten Funktionen (F) eine oder mehrere der folgenden umfassen:
• intelligente Funktionen, enthaltend:
- kluges Kurbelwellenmanagement
- intelligenter Wachhund
- Schwungradschnittstelle
- Hochfahr- und Einschaltlogik
• Leistungsversorgungen, enthaltend:
- ECU-Leistungsversorgungen
- Sensor-Leistungsversorgungen
• Kommunikationsschnittstellen, enthaltend:
- MSC- (Micro Second Channel) Schnittstelle
- LIN- (Local Interconnect Network) Transceiver
- CAN- (Controller Area Network) Transceiver
• Lastansteuerkanäle.

6. Elektronische Steuereinheit für einen Kraftfahrzeug-Verbrennungsmotor nach einem der vorhergehenden Ansprüche, wobei die integrierte Schaltung (U-Chip) enthält:
- einen Testcontroller (TC), der dafür konstruiert ist, die Durchführung der Diagnosefunktion (DIAG) zu ermöglichen und zu synchronisieren;
- eine Schaltung im Test (CUT), die die sicherheitsrelevante Funktion (F), die getestet werden soll, implementiert;
- einen Testmustergenerator (TPG), der dafür konstruiert ist, den korrekten Betriebsablauf der Schaltung im Test (CUT) zu testen;
- eine Ausgabereaktionsanalyseeinrichtung (ORA), die dafür konstruiert ist, eine Ausgabe der Schaltung im Test (CUT) mit einer erwarteten Ausgabe zu vergleichen und eine Anzeige des Testerfolgs oder des Testversagens bereitzustellen;
- eine Eingabeisolierungsschaltung (IIC), die dafür konstruiert ist, eine Eingabe der Schaltung im Test (CUT) mit dem Testmuster (TPG) zu verbinden, wenn die Diagnosefunktion (DIAG) ausgeführt werden muss; und
- eine Ausgabeisolierungsschaltung (OIC), die dafür konstruiert ist, eine Ausgabe der Schaltung im Test (CUT) mit der Ausgabereaktionsanalyseeinrichtung zu verbinden, nachdem die Diagnosefunktion (DIAG) durchgeführt wurde.

7. Elektronische Steuereinheit für einen Kraftfahrzeug-Verbrennungsmotor nach einem der vorhergehenden Ansprüche, wobei die integrierte Schaltung (U-Chip) ferner eingebettete sicherheitsrelevante-Last-Treiber aufweist, durch welche die integrierte Schaltung (U-Chip) sicherheitsrelevante Lasten (G2) ansteuert; wobei der Mikrocontroller (µC) keine eingebetteten sicherheitsrelevante-Last-Treiber aufweist; wobei die elektronische Steuereinheit (ECU) des Kraftfahrzeug-Verbrennungsmotors ferner externe sicherheitsrelevante-Last-Treiber, die von dem Mikrocontroller (µC) getrennt sind und von diesem gesteuert werden, durch welche der Mikrocontroller (µC) unterschiedliche sicherheitsrelevante Lasten (G1) ansteuert; und wobei die externen sicherheitsrelevante-Last-Treiber mit jeweiligen eingebetteten Über- /Unterspannungsüberwachern (O/U VM) versehen sind, die dafür konstruiert sind, eine von dem Mikrocontroller (µC) zu den jeweiligen sicherheitsrelevanten Lasten (G1) sich ausbreitende Überspannung zu erfassen und in Reaktion darauf einen Befehl zur Energielosschaltung der zugehörigen sicherheitsrelevanten Lasten (G1) zu erzeugen.

8. Elektronische Steuereinheit für einen Kraftfahrzeug-Verbrennungsmotor nach Anspruch 7, wobei die integrierte Schaltung (U-Chip) ferner eine elektrische Leistungsversorgungseinheit aufweist, die so angeordnet ist, dass sie die integrierte Schaltung (U-Chip), den Mikrocontroller (µC) und die externen sicherheitsrelevante-Last-Treiber mit Leistung versorgt.

9. Kraftfahrzeug, enthaltend eine elektronische Steuereinheit für einen Kraftfahrzeug-Verbrennungsmotor nach einem der vorhergehenden Ansprüche.

## Revendications

1. Unité de commande électronique (ECU) automobile de moteur à combustion interne qui doit réaliser des fonctions liées à la sécurité (F) avec un niveau d'intégrité de sécurité automobile (ASIL) prédéterminé ; dans laquelle l'unité de commande électronique automobile (ECU) comprend un microcontrôleur (µC) et un circuit intégré (U-Chip) distinct du microcontrôleur (µC) et communiquant avec celui-ci ; dans laquelle le microcontrôleur (µC) est conçu pour réaliser une ou plusieurs fonctions liées à la sécurité (F) avec le même niveau d'intégrité de sécurité automobile que celui requis pour l'unité de commande électronique (ECU) automobile ; dans laquelle le circuit intégré (U-Chip) est conçu pour réaliser une ou plusieurs fonctions liées à la sécurité (F) avec un niveau d'intégrité de sécurité automobile inférieur à celui du microcontrôleur (µC) ; dans laquelle le circuit intégré (U-Chip) est en outre conçu pour réaliser, pour chaque fonction liée à la sécurité (F) réalisée, une fonction de diagnostic (DIAG) correspondante conçue pour détecter des défaillances dans la réalisation de la fonction liée à la sécurité (F) ; et dans laquelle le microcontrôleur (µC) est conçu pour réaliser, pour chaque fonction de diagnostic (DIAG) réalisée, une fonction de surveillance (MON) correspondante conçue pour surveiller la réalisation de la fonction de diagnostic (DIAG) correspondante par le circuit intégré (U-Chip) pour détecter des défaillances qui peuvent compromettre la capacité diagnostique de la fonction de diagnostic (DIAG).

2. Unité de commande électronique automobile de moteur à combustion interne selon la revendication 1, dans laquelle la fonction de surveillance (MON) est conçue pour réaliser à nouveau des essais réalisés par la fonction de diagnostic (DIAG) pour vérifier une bonne réalisation à la fois de la fonction liée à la sécurité (F) et de la fonction de diagnostic (DIAG) ; et dans laquelle la fonction de surveillance (MON) est en outre conçue pour déclencher une réaction sécuritaire lorsque soit une défaillance d'essai de la fonction liée à la sécurité (F), soit une discordance entre un résultat d'essai rapporté par la fonction de diagnostic (DIAG) et un résultat d'essai rapporté par la fonction de surveillance (M) est détectée.

3. Unité de commande électronique automobile de moteur à combustion interne selon la revendication 2, dans laquelle la réaction sécuritaire déclenchée par la fonction de surveillance (MON) comprend la mise hors tension de charges liées à la sécurité automobile.

4. Unité de commande électronique automobile de moteur à combustion interne selon l'une quelconque des revendications précédentes, dans laquelle le niveau d'intégrité de sécurité automobile de réalisation de fonctions liées à la sécurité (F) requis pour l'unité de commande électronique (ECU) automobile est ASIL B, tandis que le niveau d'intégrité de sécurité automobile de réalisation de fonctions liées à la sécurité (F) requis pour le circuit intégré (U-Chip) est ASIL QM (à gestion de qualité).

5. Unité de commande électronique automobile de moteur à combustion interne selon l'une quelconque des revendications précédentes, dans laquelle les fonctions liées à la sécurité (F) comprennent une ou plusieurs de ce qui suit :
• des fonctions intelligentes comprenant :
- gestion de démarrage intelligente
- horloge de surveillance intelligente
- interface de volant d'inertie
- logique d'activation de puissance et réveil
• alimentations électriques comprenant :
- alimentations électriques d'ECU
- alimentations électriques de capteur
• interfaces de communication comprenant :
- interface MSC (canal de microseconde)
- émetteur-récepteur LIN (réseau d'interconnexion local)
- émetteur-récepteur CAN (réseau de zone de dispositif de commande)
• canaux de pilotage de charge.

6. Unité de commande électronique automobile de moteur à combustion interne selon l'une quelconque des revendications précédentes, dans laquelle le circuit intégré (U-Chip) comprend :
- un dispositif de commande d'essai (TC) conçu pour activer et synchroniser la réalisation de la fonction de diagnostic (DIAG) ;
- un circuit à l'essai (CUT), qui implémente la fonction liée à la sécurité (F) à mettre à l'essai ;
- un générateur de schéma d'essai (TPG) conçu pour mettre à l'essai un fonctionnement correct du circuit à l'essai (CUT) ;
- un analyseur de réponse de sortie (ORA) conçu pour comparer une sortie du circuit à l'essai (CUT) à une sortie prévue et fournir une indication de succès d'essai ou de défaillance d'essai ;
- un circuit d'isolation d'entrée (IIC) conçu pour connecter une entrée du circuit à l'essai (CUT) au générateur de schéma d'essai (TPG) lorsque la fonction de diagnostic (DIAG) doit être réalisée ; et
- un circuit d'isolation de sortie (OIC) conçu pour connecter une sortie du circuit à l'essai (CUT) à l'analyseur de réponse de sortie après la réalisation de la fonction de diagnostic (DIAG).

7. Unité de commande électronique automobile de moteur à combustion interne selon l'une quelconque des revendications précédentes, dans laquelle le circuit intégré (U-Chip) comprend en outre des pilotes de charge liée à la sécurité incorporés, par l'intermédiaire desquels le circuit intégré (U-Chip) pilote des charges liées à la sécurité (G2) ; dans laquelle le microcontrôleur (µC) est dépourvu de pilotes de charge liée à la sécurité incorporés ; dans laquelle l'unité de commande électronique (ECU) automobile de moteur à combustion interne comprend en outre des pilotes de charge liée à la sécurité externes séparés du microcontrôleur (µC) et commandés par celui-ci, par l'intermédiaire desquels le microcontrôleur (µC) pilote différentes charges liées à la sécurité (G1) ; et dans laquelle les pilotes de charge liée à la sécurité externes sont pourvus de moniteurs de surtension/sous-tension (O/U VM) incorporés, conçus pour détecter une surtension se propageant depuis le microcontrôleur (µC) vers les charges liées à la sécurité (G1) respectives et pour générer en réponse un ordre de mise hors tension pour les charges liées à la sécurité (G1) associées.

8. Unité de commande électronique (ECU) automobile de moteur à combustion interne selon la revendication 7, dans laquelle le circuit intégré (U-Chip) comprend en outre une unité d'alimentation électrique agencée pour alimenter le circuit intégré (U-Chip), le microcontrôleur (pC) et les pilotes de charge liée à la sécurité externes.

9. Véhicule motorisé comprenant une unité de commande électronique automobile de moteur à combustion interne selon l'une quelconque des revendications précédentes.
